# EUROPEAN PATENT APPLICATION

(11) **EP 1 688 886 A1**
(43) Date of publication of application: **09.08.2006**
(21) Application number: 04819311.4
(22) Date of filing: 16.11.2004
(51) Int. Cl.: G07B 15/00

(54) **VEHICLE MANAGEMENT SYSTEM**

(30) Priority: 26.11.2003 JP 2003395070
(71) Applicant: MATSUSHITA ELECTRIC INDUSTRIAL CO., LTD., Kadoma-shi, Osaka 571-8501 (JP)
(72) Inventor: YOSHIKAWA, Hiroyuki Mats. Elec. Ind. Co., Ltd., Chuo-ku, Osaka 540-6319 (JP)
(74) Representative: Grünecker, Kinkeldey, Stockmair & Schwanhäusser Anwaltssozietät
(86) International application number: PCT/JP2004/017003
(87) International publication number: WO 2005/052867

(57) **Abstract**

A vehicle management system is disclosed that can eliminate user dissatisfaction with toll collection at a time of traffic congestion and improve driving safety. In this system, when a vehicle (101) with an on-board communication terminal apparatus (102) passes through gates (103, 106) provided at the entrance and exit of a toll road and gates (104, 105) provided at the entrance and exit of a service area (parking area), the times of passage of the vehicle (101) through the gates are detected by detection apparatuses (107 through 110) installed at the gates, and a central control apparatus (111) calculates a toll according to the time during which the toll road is used excluding time spent at the service area, and the distance traveled on the toll road, based on the times of passage through the gates.

## Description

### Technical Field

The present invention relates to a vehicle management system that manages vehicles using a toll road.

### Background Art

Hitherto, an automatic toll collection system (ETC: Electronic Toll Collection) that collects a toll from a moving vehicle
using radio communication has been operating on toll roads such as expressways with the main object of reducing congestion at toll gates.

With ETC, toll collection processing equipment is installed at the entrance and exit of a toll road, a communication terminal apparatus is installed in each vehicle, and radio communication is performed between the toll collection processing equipment and communication terminal apparatus when a vehicle passes through the entrance or exit of a toll road, enabling toll collection to be performed without the vehicle having to stop temporarily.

The content presented in Patent Literature 1 is known as a progressive technology using ETC. FIG.1 is a schematic diagram showing the configuration of a toll road toll collection system 10 described in Patent Literature 1. In this figure, the passage of a vehicle 13 is detected at gates 11 and 12 located at the boundaries of a toll collection section. In order for a toll to be collected from vehicle 13, a mobile terminal apparatus 14 is installed in vehicle 13, a detection apparatus 15 that performs communication with mobile terminal apparatus 14 is installed at gate 11, and a similar detection apparatus 16 is installed at gate 12. Toll road toll collection system 10 is equipped with a toll calculation apparatus 17 that calculates the toll for each vehicle 13. Detection apparatuses 15 and 16 and toll calculation apparatus 17 are mutually connected by a digital channel 18. Mobile terminal apparatus 14 transmits fuel consumption data for vehicle 13 to toll calculation apparatus 17, and a toll is collected according to the fuel consumption data. By this means, the toll to be paid is lower when a vehicle is driven in such a way that the amount of exhaust gas emitted is reduced, thereby intending to ensure an improvement in the atmospheric environment.
Non-patent Document 1: Japanese Patent Application Laid-Open No.2003-178342

### Disclosure of Invention

### Problems to be Solved by the Invention

However, even when an above-described automatic toll collection system is used, traffic congestion is not reduced, and a high toll must still be paid even though there is congestion. Also, many traffic accidents that are causes of congestion occur, and causes of these accidents include speeding and driver drowsiness. To control speeding, automatic speed trap equipment has already been installed on expressways, but if speed is reduced only where such equipment is installed, this equipment cannot have a speed controlling effect, and cannot be said to effectively
reduce traffic accidents caused by speeding.

It is an object of the present invention to provide a vehicle management system that eliminates user dissatisfaction with toll collection at a time of traffic congestion, and improves driving safety.

### Means for Solving the Problems

A vehicle management system of the present invention has a configuration that includes: a first and second gate provided at the entrance and exit of a toll road; a third and fourth gate provided at the entrance and exit of a rest stop, including a service area or parking area; a communication terminal apparatus installed in a vehicle; detection apparatuses that are installed at the aforementioned first through fourth gates, and by performing radio communication with the vehicle that passes through the gates, detect that vehicle and the times of its passage through the gates; and a central control apparatus that calculates a toll according to the time during which the toll road is used excluding time spent at the rest stop, and the distance over which the toll road is used, based on the times of passage through the gates detected by the aforementioned detection apparatuses.

### Advantageous Effect of the Invention

According to the present invention, by calculating a toll according to the time during which a toll road is used excluding time spent at a rest stop, including a service area or parking area, and the distance traveled, it is possible to eliminate user dissatisfaction at paying the same toll at a time of traffic congestion as at a normal time when there is no congestion, and also to curb speeding, thereby enabling driving safety to be improved.

### Brief Description of Drawings

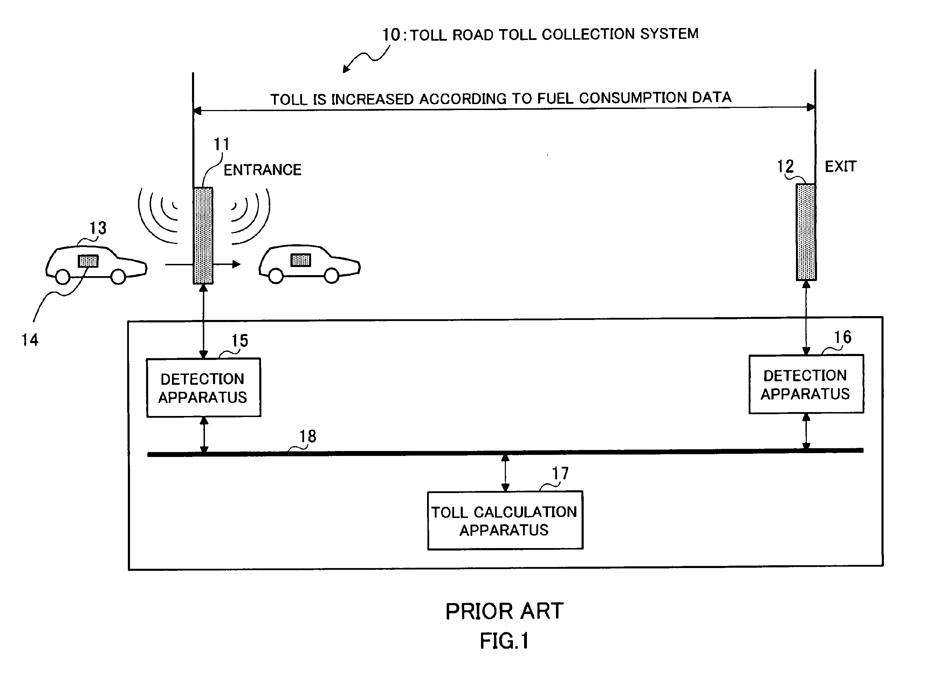

FIG.1 is a schematic diagram showing the configuration of a conventional toll road vehicle management system;
FIG.2 is a schematic diagram showing the configuration of a vehicle management system according to Embodiment 1 of
   the present invention;
FIG.3 is a block diagram showing the internal configuration of the communication terminal apparatus, detection apparatus, and central control apparatus shown in FIG.2;
FIG.4 is a drawing showing an actual example of a toll table according to Embodiment 1 of the present invention;
FIG.5 is a sequence diagram showing the operation of a vehicle management system according to Embodiment 1 of the present invention;
FIG.6 is a sequence diagram showing the operation of a vehicle management system according to Embodiment 1 of the present invention; and
FIG.7 is a sequence diagram showing the operation of a vehicle management system according to Embodiment 2 of the present invention.

### Best Modes for Carrying Out the Invention

Embodiments of the present invention will now be described in detail with reference to the accompanying drawings.

(Embodiment 1)

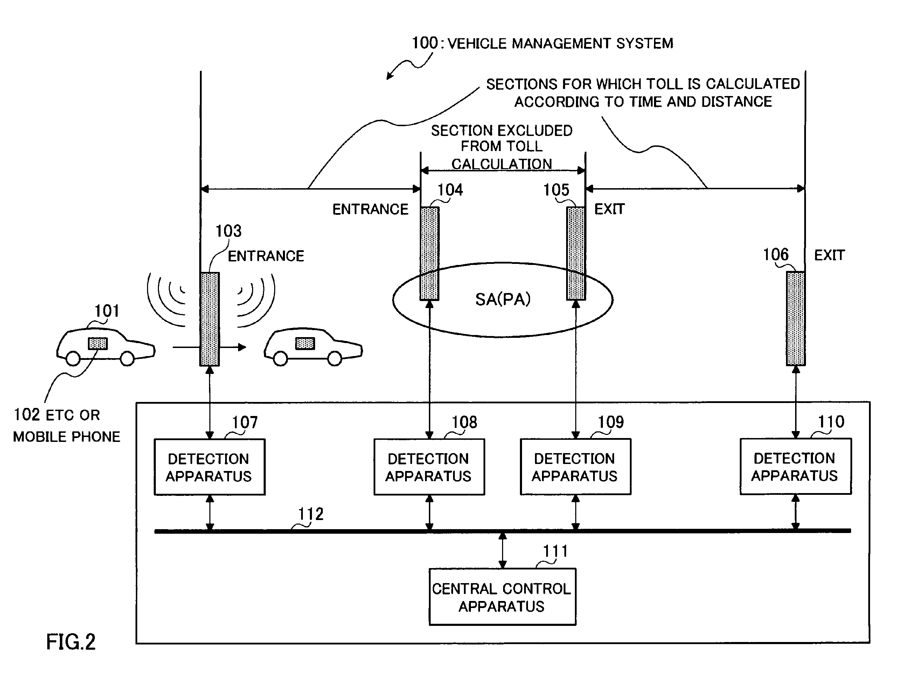

FIG.2 is a schematic diagram showing the configuration of a vehicle management system 100 according to Embodiment 1 of the present invention. In vehicle management system 100 shown in this figure, when a vehicle 101 such as an automobile or motorcycle passes through
a predetermined section for which a toll is collected (a toll collection section), a toll is automatically collected from
that vehicle 101, and the passage status of vehicle 101 using the toll road is ascertained.

Vehicle 101 is equipped with a communication terminal apparatus 102 that has a radio communication function, this communication terminal apparatus 102 being an ETC (Electronic Toll Collection) in-vehicle device, mobile phone, or the like. Personal information is stored in communication terminal apparatus 102 beforehand. Personal information may include, for example, name, address, bank account number, credit card number, and so forth.

Gates 103 through 106 are provided at boundaries of a toll collection section, and are equipped with detection apparatuses 107 through 110 respectively that perform radio communication with communication terminal apparatus 102 provided in vehicle 101. When vehicle 101 passes through a gate, a detection apparatus 107 through 110 performs radio communication with communication terminal apparatus 102 provided in vehicle 101, detects the time of passage of the vehicle, and reports the detected time of passage to a central control apparatus 111 and communication terminal apparatus 102.

Central control apparatus 111 calculates the toll to be collected from the vehicle based on the times reported by detection apparatuses 107 through 110, and collects the toll from vehicle 101 via detection apparatus 110 of gate 106 provided at the exit of the toll road. Toll calculation is performed based on the distance from the entrance to the exit of the toll road traveled by vehicle 101, and the time required to travel that distance, omitting time spent at a service area (SA) and/or parking area (PA).

A digital channel 112 mutually connects detection apparatuses 107 through 110 and central control apparatus 111, and forms a bidirectional communication path.

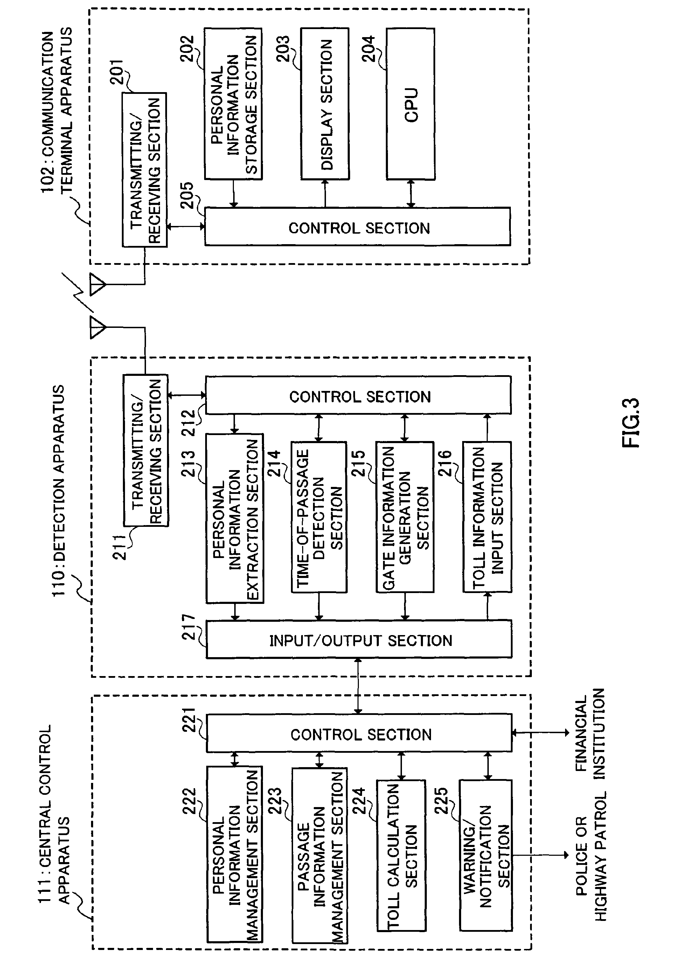

FIG.3 is a block diagram showing the internal configuration of communication terminal apparatus 102, detection apparatus 110, and central control apparatus 111 shown in FIG.2. First, the internal configuration of communication terminal apparatus 102 will be described. A transmitting/receiving section 201 performs radio communication with detection apparatus 110 installed at gate 106, and performs transmission of a signal output from a control section 205 and reception of a signal transmitted from detection apparatus 110.

A personal information storage section 202 stores personal information of the owner or contractor of communication terminal apparatus 102, and outputs stored personal information to control section 205. Display section 203 is a liquid crystal display or the like that displays text, images, and so forth, and displays information output from control section 205. CPU 204 controls transmitting/receiving section 201, personal information storage section 202, and display section 203 via control section 205 based on a control program.

Control section 205 takes personal information output from personal information storage section 202 as a transmission unit for radio communication, and outputs this to transmitting/receiving section 201. Control section 205 also outputs information contained in a signal output from transmitting/receiving section 201 to display section 203 to be displayed.

Next, the internal configuration of detection apparatus 110 will be described. Transmitting/receiving section 211 performs radio communication with communication terminal apparatus 102. Transmitting/receiving section 211 receives a signal transmitted from communication terminal apparatus 102 and outputs the received signal to control section 212, and also transmits a signal output from control section 212 to communication terminal apparatus 102.

Control section 212 outputs a signal output from transmitting/receiving section 211 to personal information extraction section 213, and also notifies time-of-passage detection section 214 and a gate information generation section 215 that a signal has been received from communication terminal apparatus 102.

Personal information extraction section 213 extracts personal information from a signal output from control section 212, and outputs the extracted personal information to central control apparatus 111 via an input/output section 217. Time-of-passage detection section 214 has a built-in clock, and detects the time at which notification is received from control section 212 (that is, the time of passage of vehicle 101), outputs the detected time to central control apparatus 111 via input/output section 217, and also notifies communication terminal apparatus 102. Gate information generation section 215 generates information that differs for each gate (for example, a name such as "Nerima interchange entrance") in order to differentiate between gates, outputs generated gate information to central control apparatus 111 via input/output section 217, and also notifies communication terminal apparatus 102.

A toll information input section 216 outputs toll information output from central control apparatus 111 to control section 212.

Here, the configuration of detection apparatus 110 installed at toll road exit gate 106 has been described; toll information input section 216 need not be provided in the detection apparatuses installed at other gates.

Next, the internal configuration of central control apparatus 111 will be described. Control section 221 authenticates personal information output from detection apparatus 110 based on personal information managed by personal information management section 222, and reports the authentication result to communication terminal apparatus 102 via detection apparatus 110. Control section 221 also outputs time information and gate information indicated as relating to the personal information to passage information management section 223. Furthermore, since the gate information here indicates a toll road exit, control section 221 controls passage information management section 223 and toll calculation section 224 and causes the toll to be calculated, reports the calculated toll to communication terminal apparatus 102 via detection apparatus 110, and also notifies a financial institution to have the relevant account debited by the amount of the toll.

Personal information management section 222 has personal information recorded in it beforehand, and recorded personal information is used to authenticate personal information transmitted from communication terminal apparatus 102.

Passage information management section 223 stores time information and gate information comprising passage information output from control section 221, with their relationship to personal information indicated.

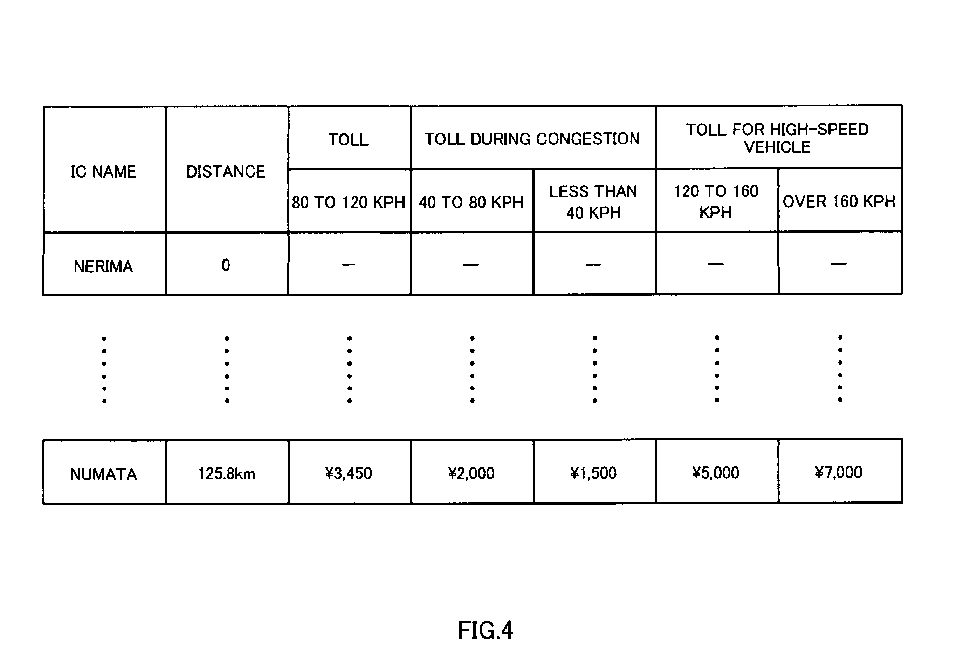

Toll calculation section 224 has a toll table based on distance and time, and obtains time information and gate information corresponding to personal information of communication terminal apparatus 102 that has reached a toll road exit from passage information management section 223 via control section 221, and finds the relevant toll from the toll table. An actual example of a toll table is shown in FIG.4. This figure shows a case in which the Nerima interchange (IC) is the entrance and the Numata IC is the exit. If the 125.8 km section between Nerima and Numata is used at a speed of 80 to 120 km per hour, the toll is 3,450 yen. The toll is set lower than normal for periods of congestion, with a toll of 2,000 yen for a speed of 40 to 80 km per hour, and a toll of 1,500 yen for a speed of less than 40 km per hour. Also, the toll is set higher than normal for high-speed driving, with a toll of 5,000 yen for a speed of 120 to 160 km per hour, and a toll of 7,000 yen for a speed of more than 160 km per hour. Thus, toll calculation section 224 is provided beforehand with a table based on distance and time (km per hour), and if the toll when driving at the legal speed limit is taken as a standard, for example, the toll is made lower than the standard toll for speeds below the legal speed limit, and is made higher than the standard toll for speeds exceeding the legal speed limit.

The adoption of this kind of toll calculation method eliminates user dissatisfaction at having the same toll collected at a time of traffic congestion as at a normal time when there is no congestion, and also curbs speeding by increasing the financial burden on users in relation to speeding, and improves driving safety.

The speed of a vehicle that reaches a toll road exit is determined by toll calculation section 224, and the determined vehicle speed is obtained by warning/notificationsection225viacontrolsection221. If the obtained speed exceeds a predetermined speed (for example, the legal speed limit), warning/notification section 225 notifies the police or highway patrol. By this means, a driver who speeds can be fined by the police or subjected to official proceedings at a later date, thereby further discouraging speeding.

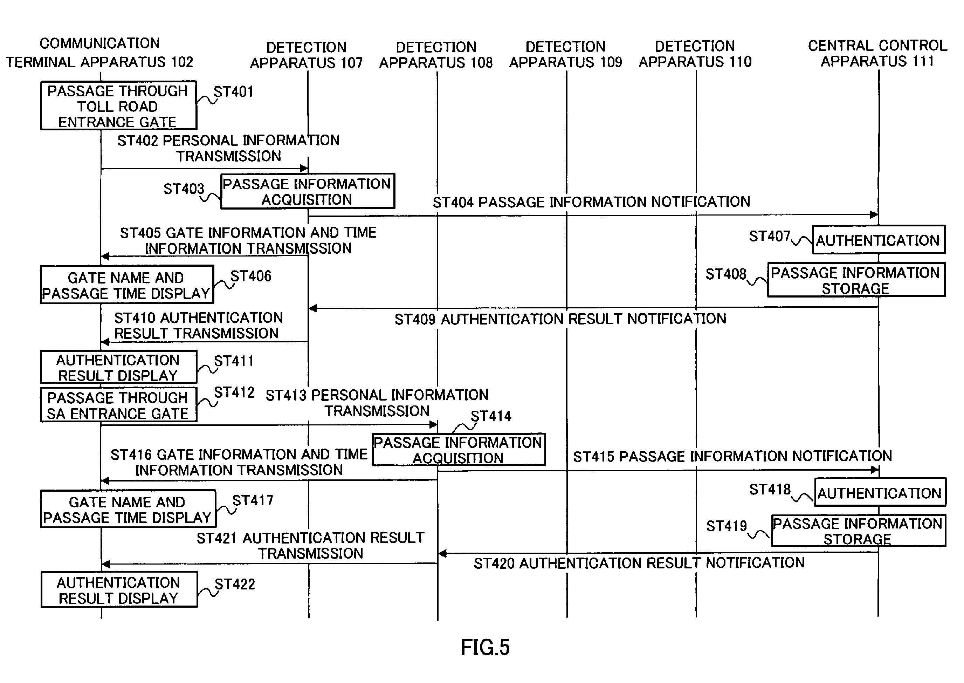

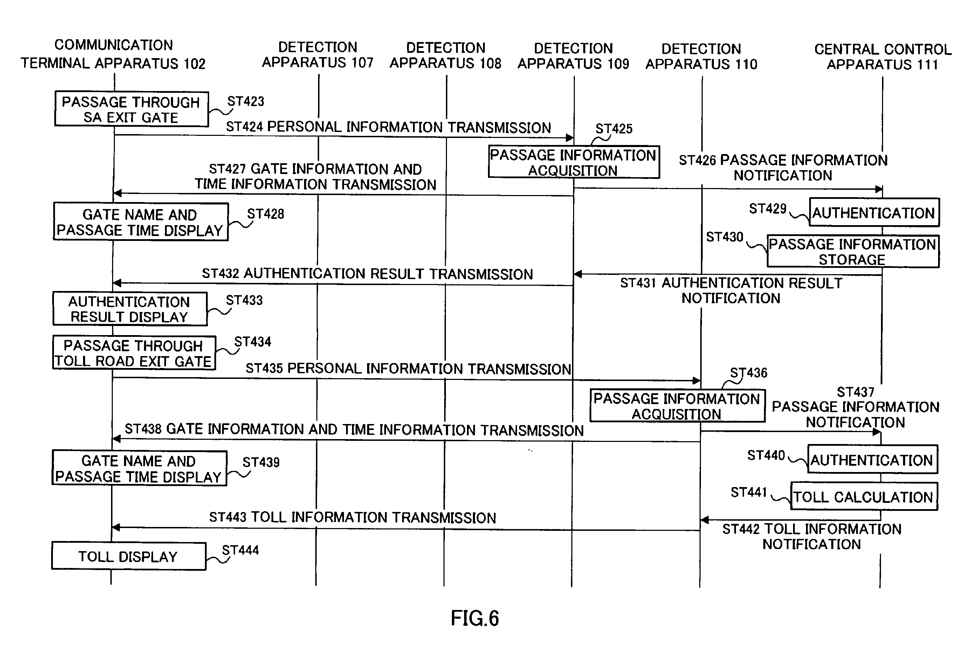

Next, the operation of vehicle management system 100 with the above-described configuration will be explained. FIG.5 and FIG.6 comprise a sequence diagram showing the operation of vehicle management system 100 according to Embodiment 1 of the present invention. In this diagram, in ST401, communication terminal apparatus 102 passes through gate 103 installed at a toll road entrance, and in ST402, personal information stored in communication terminal apparatus 102 is transmitted to detection apparatus 107. In ST403, detection apparatus 107 obtains personal information from communication terminal apparatus 102 that has passed through the gate, detects the time at which the personal information was obtained, and also generates its own gate information. Personal information, time information and gate information, and so forth are treated as passage information. InST404, detection apparatus 107 reports passage information to central control apparatus 111.

In ST405, time information and gate information obtained by detection apparatus 107 are transmitted to communication terminal apparatus 102, and in ST406, communication terminal apparatus 102 displays the gate passage time and the name of the gate passed through on display section 203.

In ST407, central control apparatus 111 authenticates the personal information reported from detection apparatus 107 based on personal information held by central control apparatus 111, and in ST408, central control apparatus 111 stores the passage information reported from detection apparatus 107. In ST409, the authentication result is reported to detection apparatus 107, and in ST410, detection apparatus 107 transmits the authentication result to communication terminal apparatus 102. In ST411, communication terminal apparatus 102 displays the result of authentication by central control apparatus 111.

In ST412, communication terminal apparatus 102 passes through gate 104 installed at an SA entrance, and in ST413, communication terminal apparatus 102 transmits personal information to detection apparatus 108. In ST414, detection apparatus 108 obtains personal information from communication terminal apparatus 102 that has passed through the gate, detects the time at which the personal information was obtained, and generates its own gate information. That is to say, detection apparatus 108 obtains passage information. In ST415, detection apparatus 108 reports passage information to central control apparatus 111.

In ST416, time information and gate information obtained by detection apparatus 108 are transmitted to communication terminal apparatus 102, and in ST417, communication terminal apparatus 102 displays the gate passage time and the name of the gate passed through on display section 203.

In ST418, central control apparatus 111 authenticates the personal information reported from detection apparatus 108 based on personal information held by central control apparatus 111, and in ST419, central control apparatus 111 stores the passage information reported from detection apparatus 108. In ST420, the authentication result is reported to detection apparatus 108, and in ST421, detection apparatus 108 transmits the authentication result to communication terminal apparatus 102. In ST422, communication terminal apparatus 102 displays the result of authentication by central control apparatus 111.

In ST423 (FIG.6), communication terminal apparatus 102 passes through gate 105 installed at the SA exit, and in ST424, communication terminal apparatus 102 transmits personal information to detection apparatus 109. In ST425, detection apparatus 109 obtains personal information from communication terminal apparatus 102 that has passed through the gate, detects the time at which the personal information was obtained, and generates its own gate information. That is to say, detection apparatus 109 obtains passage information. In ST426, detection apparatus 109 reports passage information to central control apparatus 111.

In ST427, time information and gate information obtained by detection apparatus 109 are transmitted to communication terminal apparatus 102, and in ST428, communication terminal apparatus 102 displays the gate passage time and the name of the gate passed through on display section 203.

In ST429, central control apparatus 111 authenticates the personal information reported from detection apparatus 109 based on personal information held by central control apparatus 111, and in ST430, central control apparatus 111 stores the passage information reported from detection apparatus 109. In ST431, the authentication result is reported to detection apparatus 109, and in ST432, detection apparatus 109 transmits the authentication result to communication terminal apparatus 102. In ST433, communication terminal apparatus 102 displays the result of authentication by central control apparatus 111.

In ST434, communication terminal apparatus 102 passes through gate 106 installed at a toll road exit, and in ST435, communication terminal apparatus 102 transmits personal information to detection apparatus 110. In ST436, detection apparatus 110 obtains personal information from communication terminal apparatus 102 that has passed through the gate, detects the time at which the personal information was obtained, and generates its own gate information. That is to say, detection apparatus 110 obtains passage information. In ST437, detection apparatus 110 reports passage information to central control apparatus 111.

In ST438, time information and gate information obtained by detection apparatus 110 are transmitted to communication terminal apparatus 102, and in ST439, communication terminal apparatus 102 displays the gate passage time and the name of the gate passed through on display section 203.

In ST440, central control apparatus 111 authenticates the personal information reported from detection apparatus 110 based on personal information held by central control apparatus 111, and in ST441, central control apparatus 111 detects that toll road exit gate 106 has been passed through, and calculates the charge (toll). In ST442, the calculated toll information is reported to detection apparatus 110, and in ST443, detection apparatus 110 transmits toll information to communication terminal apparatus 102. In ST444, communication terminal apparatus 102 displays the transmitted toll information on display section 203.

Thus, according to this embodiment, by calculating a toll according to the distance traveled and traveling time on a toll road, excluding time spent at a service area or parking area, it is possible to eliminate user dissatisfaction at paying the same toll at a time of traffic congestion as at a normal time when there is no congestion, and also to curb speeding, thereby enabling driving safety to be improved.

In the description of this embodiment, the kind of toll table shown in FIG.4 has been taken as an example, but the present
invention is not limited to this, and speed ranges and tolls may be more finely subdivided, or tolls may be determined by
calculation.

(Embodiment 2)
The configuration of a vehicle management system according to Embodiment 2 of the present invention is identical to that in FIG.3, and therefore parts that have a different function from that in Embodiment 1 will be described with reference to FIG.3.

Passage information management section 223 of central control apparatus 111 detects a vehicle (personal information) for which the continuous traveling time is greater than or equal to a predetermined time (for example, two hours) based on stored
gate information and time information, and outputs relevant personal information to control section 221.

Control section 221 sends a rest advisory to a communication terminal apparatus that has personal information output from passage information management section 223 to all detection apparatuses 107 through 110.

Detection apparatuses 107 through 110 transmit a rest advisory sent from central control apparatus 111 to a relevant communication terminal apparatus 102.

Communication terminal apparatus 102 receives a rest advisory transmitted from the nearest detection apparatus, and performs display urging the driver to take a rest on display section 203.

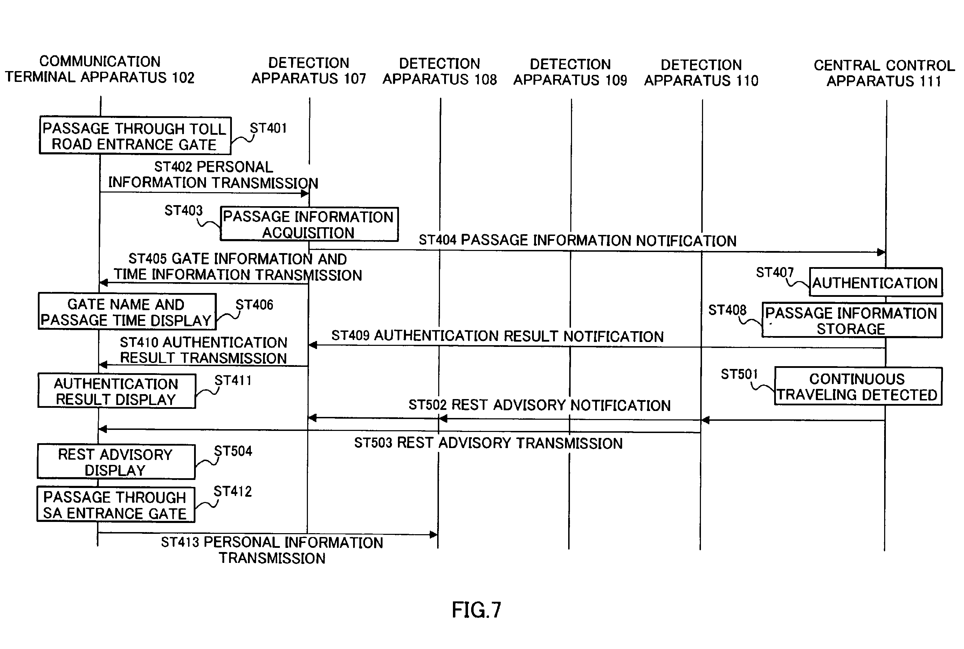

Next, the operation of a vehicle management system with the above-described function will be explained. FIG.7 is a sequence diagram showing the operation of a vehicle management system according to Embodiment 2 of the present invention. Parts in FIG.7 that are common to FIG.5 are assigned the same codes as in FIG.5, and detailed descriptions thereof are omitted. Although only steps up to and including ST413 are shown in FIG.7 for reasons of space, the same processing as in ST414 through ST444 in FIG.5 and FIG.6 is performed thereafter.

In ST501, central control apparatus 111 detects a vehicle that has been traveling on a toll road continuously for a predetermined time or longer, and in ST502, central control apparatus 111 sends a rest advisory to all detection apparatuses 107 through 110 to advise the driver of the detected vehicle to take a rest. In ST503, detection apparatuses 107 through 110 transmit a rest advisory to communication terminal apparatus 102. In ST504, communication terminal apparatus 102 displays the received rest advisory on display section 203.

Thus, according to this embodiment, if, as a result of urging a driver who has been driving continuously for a predetermined time or longer to take a rest, the driver takes a rest periodically, the strain of driving upon the driver is alleviated, the driver can recover from accumulated driving fatigue, and driver drowsiness or loss of concentration can be prevented, enabling the occurrence of accidents to be curbed.

Although a mobile phone is envisaged as a communication terminal apparatus in this embodiment, an ETC in-vehicle device may also be used as long as radio communication can be performed at a distance from a gate.

(Embodiment 3)
The configuration of a vehicle management system according to Embodiment 3 of the present invention is identical to that in FIG.3, and therefore parts that have a different function from that in Embodiment 1 will be described with reference to FIG.3.

Passage information management section 223 of central control apparatus 111 detects a vehicle that has been parked at an SA or PA continuously for a predetermined time (for example, one day) or longer based on stored gate information and time information, and outputs relevant personal information to warning/notification section 225 via the control section.

Warning/notification section 225 reports personal information output from passage information management section 223 via control section 221 to a relevant organization such as the police or highway patrol.

Thus, according to this embodiment, by detecting a vehicle that has been parked continuously at an SA or PA for a predetermined time or longer, and reporting relevant personal information to the police or highway patrol, prompt action can be taken in the event of an incident, for example, contributing to the early solution of such an incident. Also, if a vehicle has been illegally abandoned at an SA or PA, it is possible to prevent the vehicle from being left unattended for a long period of time.

A first aspect of the present invention is a vehicle management system equipped with: a first and second gate provided at the entrance and exit of a toll road; a third and fourth gate provided at the entrance and exit of a rest stop, including a service area or parking area; a communication terminal apparatus installed in a vehicle; detection apparatuses that are installed at the aforementioned first through fourth gates, and by performing radio communication with the vehicle that passes through the gates, detect that vehicle and the time of its passage through the gates; and a central control apparatus that calculates a toll according to the times during which the toll road is used excluding time spent at the rest stop, and the distance over which the toll road is used, based on the times of passage through the gates detected by the aforementioned detection apparatuses.

According to this configuration, by detecting the times of passage of the vehicle through the gates provided at the entrance and exit of the toll road and the entrance and exit of the rest stop, and calculating a toll according to the times during which the toll road is used excluding time spent at the rest stop, and the distance over which the toll road is used, it is possible to eliminate user dissatisfaction at paying the same toll at a time of traffic congestion as at a normal time when there is no congestion, and also to curb speeding, thereby enabling driving safety to be improved.

A second aspect of the present invention is a vehicle management system in which, in the above-described mode, the aforementioned central control apparatus calculates the average traveling speed of the vehicle from the time during which the toll road is used excluding time spent at the rest stop, and the distance over which the toll road is used, and notifies the police if the calculated average speed exceeds a predetermined speed.

According to this configuration, by notifying the police when a vehicle traveling on a toll road exceeds a predetermined speed such as the legal speed limit, speeding can be curbed by the police taking official action against the driver of the vehicle in question, thereby enabling safety to be improved.

A third aspect of the present invention is a vehicle management system wherein, in an above-described mode, the aforementioned central control apparatus detects the vehicle whose continuous traveling time is greater than or equal to a predetermined time, and sends a rest advisory to the detected vehicle urging the driver to take a rest.

According to this configuration, if, as a result of urging the driver who has been driving continuously for a predetermined time or longer to take a rest, the driver takes a rest periodically, the strain of driving upon the driver is alleviated, the driver can recover from accumulated driving fatigue, and driver drowsiness or loss of concentration can be prevented, enabling the occurrence of accidents to be curbed.

A fourth aspect of the present invention is a vehicle management system wherein, in an above-described mode, the aforementioned central control apparatus determines whether or not the vehicle has been parked continuously at the rest stop for a predetermined time or longer, and notifies the police if the vehicle has been parked for the predetermined time or longer.

According to this configuration, since there is a possibility of involvement in an incident or illegal abandonment when a vehicle has been parked continuously at a rest stop for a predetermined time, such as a day, two days, or a week, notifying the police in such a case enables early solution of an incident, and prevents a vehicle from being left unattended for a long period of time.

The present application is based on Japanese Patent Application No.2003-395070 filed on November 26, 2003, the entire content of which is expressly incorporated herein by reference.

### Industrial Applicability

The present invention, by collecting a toll according to the time during which a toll road is used excluding time spent at a service area or parking area, and the distance traveled, has the effects of eliminating user dissatisfaction with toll collection at a time of traffic congestion and improving driving safety, and can be applied to toll roads such as expressways.

## Claims

1. A vehicle management system comprising:
a first and second gate provided at an entrance and exit of a toll road;
a third and fourth gate provided at an entrance and exit of a rest stop, including a service area and parking area;
a communication terminal apparatus installed in a vehicle;
a detection apparatuses that are installed at the first through fourth gates, and, by performing radio communication with the vehicle that passes through the gates, detect the vehicle and times of passage through the gates; and
a central control apparatus that calculates a toll according to a time during which the toll road is used excluding time spent at the rest stop, and a distance over which the toll road is used, based on the times of passage through the gates detected by the detection apparatuses.

2. The vehicle management system according to claim 1, wherein the central control apparatus calculates an average traveling speed of the vehicle from the time during which the toll road is used excluding the time spent at the rest stop and the distance over which the toll road is used, and notifies the police if a calculated average speed exceeds a predetermined speed.

3. The vehicle management system according to claim 1, wherein the central control apparatus detects a vehicle whose continuous traveling time is greater than or equal to a predetermined time, and sends a rest advisory to a detected vehicle urging a driver to take a rest.

4. The vehicle management system according to claim 1, wherein the central control apparatus determines whether or not a vehicle has been parked continuously at the rest stop for a predetermined time or longer, and notifies the police if the vehicle has been parked for the predetermined time or longer.
